# EUROPÄISCHE PATENTSCHRIFT

(11) **EP 2 228 246 B1**
(45) Veröffentlichungstag und Bekanntmachung des Hinweises auf die Patenterteilung: **08.05.2013**
(21) Anmeldenummer: 10002354.8
(22) Anmeldetag: 08.03.2010
(51) Int. Cl.: B60J 7/12

(54) **Faltverdeck für einen Personenkraftwagen**
Collapsible roof for a cabriolet vehicle
Toit escamotable pour un véhicule cabriolet

(30) Priorität: 14.03.2009 DE 102009013279
(43) Veröffentlichungstag der Anmeldung: 15.09.2010
(73) Patentinhaber: Magna Car Top Systems GmbH, 74321 Bietigheim-Bissingen (DE)
(72) Erfinder: Reck, Philip, 71229 Leonberg (DE)
(74) Vertreter: Völger, Silke Beatrix

(56) Entgegenhaltungen:
- DE-A1- 10 113 100
- DE-A1- 10 113 101
- DE-A1-102007 061 602

## Beschreibung

Die Erfindung bezieht sich auf ein Faltverdeck für einen Personenkraftwagen, das zwischen einer Schließstellung und einer Offenstellung bewegbar ist nach dem Oberbegriff des Patentannspruchs 1.

Es ist ein Personenkraftwagen mit einem Faltverdeck bekannt, US 1,376,827, das von zwei beweglichen an einem Aufbau gelagerten vorderen und hinteren Spriegeln getragen wird; beide Spriegel erstrecken sich quer zur Fahrzeuglängsrichtung. Am vorderen Spriegel ist auf einer einem Fahrgastraum zugekehrten Seite eine Innenleuchte angebracht, die zwei in ein Gehäuse eingesetzte Leuchtenkörper besitzt. Das Gehäuse der Innenleuchte ist mit diesem vorderen Spriegel verbunden.

Aus der gattungsgemäßen DE 101 13 100 A1 geht ein Faltverdeck für ein Kraftfahrzeug hervor, das eine flexible Verdeckhaut umfasst. Die Verdeckhaut wird bei geschlossenem Faltverdeck von wenigstens einem Spriegel aufgespannt gehalten. Der Spriegel besteht aus einem biegesteifen Profil, das zumindest teilweise einen Hohlraum umschließt. Darüber hinaus ist eine in Längsrichtung des Spriegels verlaufende Begrenzungswand des Hohlraums mit einer Öffnung versehen. In diese Öffnung ist ein Bauteil z.B. mit einer Beleuchtungsfunktion für einen Fahrgastraum eingesetzt.

Es ist Aufgabe der Erfindung, ein Faltverdeck für einen Personenkraftwagen so auszubilden, dass eine in einem Fahrgastraum angeordnete Innenleuchte funktionsgerecht eingebaut und Bewegungen von Innenverkleidung und Spriegeln beim Verstellen von letzteren zielgerichtet folgt, und zwar dann, wenn das Faltverdeck zwischen Schließstellung und Offenstellung bewegt wird.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Integration der Innenleuchte in die Innenverkleidung des Faltverdecks konstruktive Freiheitsgrade ergibt, die die Unterbringung im Fahrgastraum und fertigungstechni-sche Prozesse betreffen. Dabei stellt das ausgeklügelte Zusammenwirken der Innenleuchte bzw. Streuscheibenrahmens mit den benachbarten ersten und zweiten Spriegeln eine gute Funktion bei bemerkenswerter Standfestigkeit sicher. Der Streuscheibenrahmen ist ein aufwandsarm herstellbares Bauteil, und er zeichnet sich durch gute Aufnahme in der Innenverkleidung und musterhafte Abstützung am ersten Spriegel aus. Die einfach aufgebaute, jedoch Maßstäbe setzende Zurreinrichtung gewährleistet, dass die Innenleuchte in der Schließstellung des Faltverdecks eine festgelegte Lage einnimmt und bei Verbringung des Faltverdecks in die Offenstellung, weil von der Zurreinrichtung entkoppelt, definiert der Innenverkleidung folgt. Vorteilhaft hervorzuheben ist darüber hinaus, dass die Zurreinrichtung ein günstig gestaltbares elastisches Band ist, das gezielt mit den beiden Spriegeln zusammenarbeitet.

In der Zeichnung wird ein Ausführungsbeispiel gezeigt, das nachstehend näher erläutert wird.

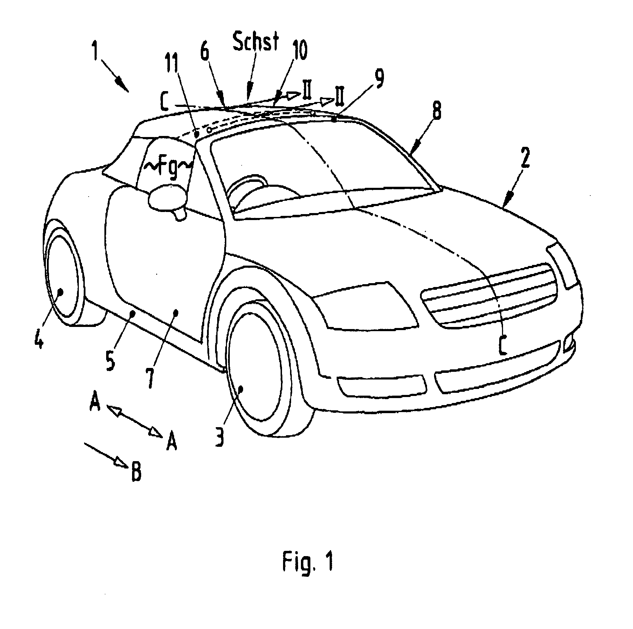

Es zeigen
Fig. 1 eine Schrägansicht auf einen Personenkraftwagen mit einem Faltverdeck von vorne rechts oben,
Fig. 2 einen Schnitt nach der Linie II-II der Fig. 1 in größerem Maßstab,
Fig. 3 Schrägansicht von hinten rechts oben auf eine Innenleuchte des Faltverdecks gemäß Fig. 1.
Fig. 4 eine Einzelheit X der Fig.2 in größerem Maßstab,
Fig. 5 eine Einzelheit Y der Fig. 4 in größerem Maßstab.

Ein Personenkraftwagen 1 umfasst einen Aufbau 2, der von Rädern 3 sowie 4 getragen wird und einen Grundkörper 5 und ein bewegliches von einer Schließstellung Schst in eine Offenstellung -nicht gezeigt- verstellbares Dach in Gestalt eines Faltverdecks 6 umfasst. Am Grundkörper 5 gehalten sind Seitentüren 7 und ein Windschutzscheibenrahmen 8, der einen oberen Querträger 9 besitzt. Mit dem Querträger 9 verbunden ist ein vorderer Bereich 10, z. B. eine Dachkappe 11, des einen Fahrgastraum Fg In der Schließstellung Schst überspannenden Faltverdecks 6.

Das Faltverdeck 6 weist einen Verdeckbezug 12 und eine Innenverkleidung 13, auch Innenhimmel genannt, und ein nicht näher dargestelltes Verdeckgestänge mit einem ersten Spriegel 14 und einem zweiten Spriegel 15 auf, die in Fahrzeuglängsrichtung A-A mit Abstand zueinander verlaufen, und zwar quer zu dieser Fahrzeuglängsrichtung A-A. Dabei liegt der zweite Spriegel in Fahrtrichtung B gesehen vor dem ersten Spriegel 14. Die Spriegel 14 und 15 erstrecken sich zumindest bereichsweise zwischen Verdeckbezug 12 und Innenverkleidung 13, die beide aus flexiblem Werkstoff bestehen.

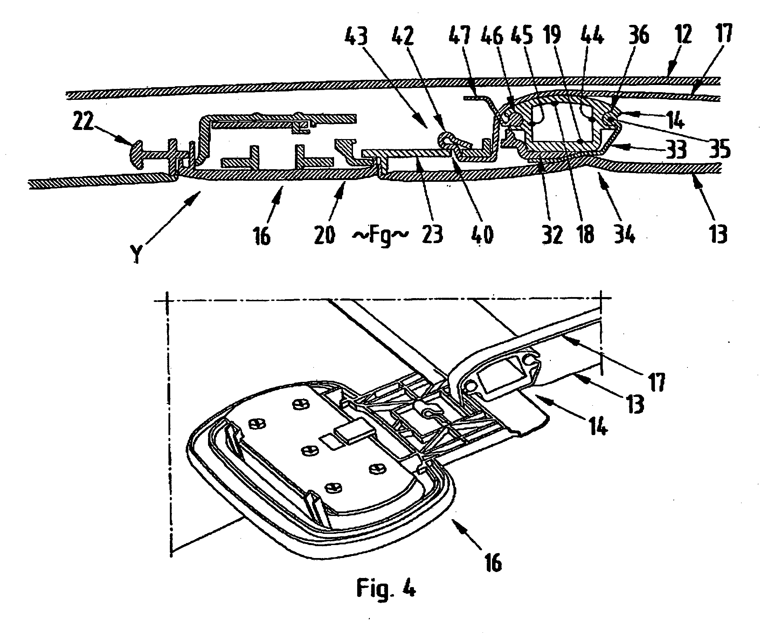

Im Fahrgastraum Fg ist eine Innenleuchte 16 angeordnet, die z.B. benachbart einer Mittellängsebene C-C und oberhalb von Rückenlehnen von Vordersitzen für Insassen -nicht dargestellt- oder in Fahrtrichtung B gesehen hinter diesen Rückenlehnen in die Innenverkleidung 13 integriert ist. Die Innenleuchte 16 wird mittels einer Zurreinrichtung 17 gegen den eine Oberseite 18 und eine Unterseite 19 aufweisenden ersten Spriegel 14 lagefixierend gespannt. Ein Streuscheibenkörper 20 der Innenleuchte 16 wird an seinem Rand 21 von einem Streuscheibenrahmen 22 aus geeignetem Werkstoff -bspw. Kunststoff- umgeben. Der Streuscheibenkörperrahmen 22 ist auf einer dem ersten Spriegel 14 zugekehrten Seite mit einer als horizontaler Stützarm 23 ausgebildeten Verlängerung versehen, die aus einem Stück mit dem Streuscheibenkörperrahmen 22 hergestellt ist. Der Stützarm 23 wirkt form- und kraftschlüssig mit dem ersten Spriegel 14 zusammen, wobei der Stützarm 23 etwa zwischen Oberseite 18 und Unterseite 19 des ersten Spriegels 14 an diesen herangeführt ist -Fig. 4-.

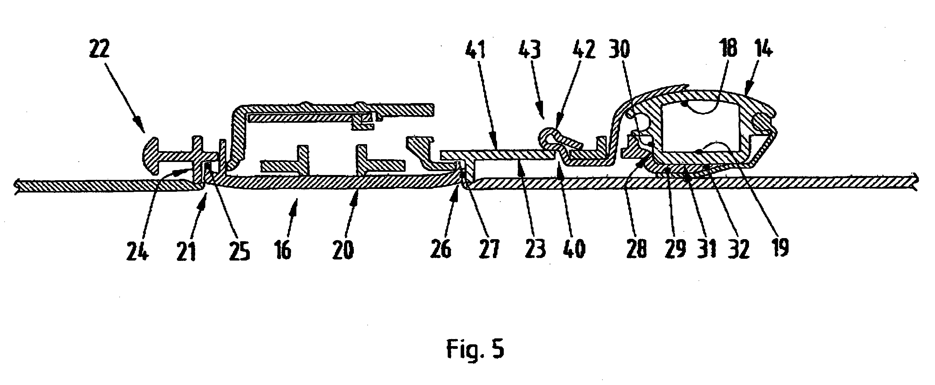

Zwischen einander zugekehrten winkelförmigen Randabschnitten 24 und 25 des Streuscheibenkörpers 20 bzw. des Streuscheibenkörperrahmens 22 ist ein eine Öffnung 26 der Innenverkleidung 13 begrenzender winkelförmiger Randbereich 27 durch Klemmen, Kleben oder dgl. festgelegt. Der Stützarm 23 schließt mit einem ersten aufrechten Stützabschnitt 28 und einem zweiten horizontalen Stützabschnitt 29 direkt an einen aufrechten Gegenabschnitt 30 bzw, einen zweiten horizontalen Gegenabschnitt 31 an, der Teil der Unterseite 19 ist. Dabei liegt der Stützarm 23 mit einem relativ flachen Stützabschnitt 32 an der flächigen Unterseite 19 des ersten Spriegels 14 an -Fig. 5-.

Der Stützabschnitt 32 ist auf einer dem Fahrgastraum Fg zugekehrten Seite mit einer aus flexiblem Werkstoff bestehenden Haltelasche 33 verbunden, wobei benachbart dem Stützabschnitt 32 die die Haltelasche 33 und die Innenverkleidung 13 an einer Verbindungsstelle 34 unter Vermittlung von Kleben, Nähen oder dgl. zusammengesetzt sind. Die Haltelasche 33 ist an einem von der Verbindungsstelle 34 abgekehrten Ende mittels einer Verdickung 35 in Gestalt eines kreisförmigen Keders in eine korrespondierende Aufnahme 36 des ersten Spriegels 14 formschlüssig eingesetzt - Fig. 4-.

Die Zurreinrichtung 17 ist als ein elastisches Band mit definierten Federeigenschaften - Kunststoff. Gummi oder dgl. -dargestellt und greift mit einem ersten Endbereich 37 am Stützarm 23 des Streuscheibenkörperrahmens 22 an und ist über die Oberseite 18 des ersten Spriegels 14 kontaktschlüssig hinweggeführt. Ein zweiter Endbereich 38 der Zurreinrichtung 17 ist an einem Element 39 des Verdeckgestänges in Lage gehalten, das im Ausführungsbeispiel durch den zweiten Spriegel 15 gebildet wird. Der erste Endbereich 37 ist durch eine Öffnung 40 einer Wand 41 des Stützarms 23 hindurchgeführt, wobei eine durch eine Schlaufe 42 gebildete Verdickung 43 sich an der Wand 41 abstützt.

Zumindest der erste Spriegel 14 wird durch einen Hohlkörper gebildet, der bspw. aus Leichtmetall besteht und im Strangpressverfahren hergestellt ist. An aufrechten Wänden 44 und 45 des ersten Spriegels 14 ist die Aufnahme 36 für die Haltelasche 33 bzw. eine weitere Aufnahme 46 für eine Haltelasche 47 eingearbeitet. Diese Haltelaschen 33 und 46 sind mit der innenverkleidung 13 bzw. dem Verdeckbezug 12 verbunden.

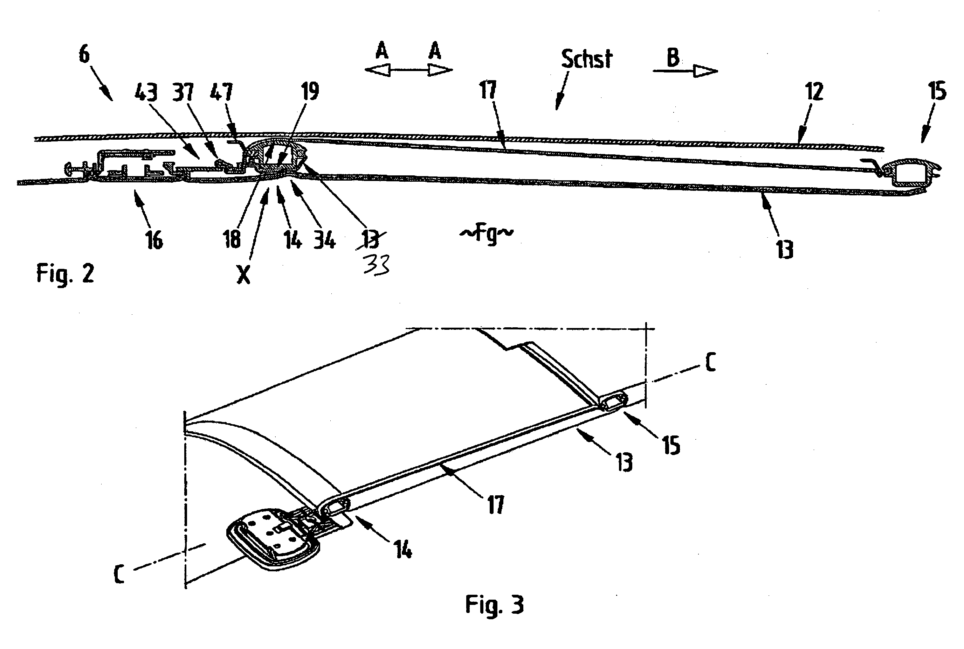

In der Schließstellung Schst des Faltverdecks 6 werden die Innenverkleidung 13 und die Innenleuchte 16 über den ersten Spriegel 14 und die Zurreinrichtung 17 in der in Fig. 3 dargestellten Lage gehalten. Beim Bewegen des Faltverdecks 6 in die Offenstellung bewegen sich der erste Spriegel 14 und der zweite Spriegel 15 zueinander, wodurch die Zurreinrichtung 17 sich entspannt und Stützwirkung des Stützarms 23 aufgehoben wird. Die Innenleuchte 16 mit Innenerkleidung 13 und auch der erste Spriegel 14 und der zweite Spriegel 15 werden zur Ablage des Faltverdecks 6 gezielt zusammengelegt.

## Patentansprüche

1. Faltverdeck (6) für einen Personenkraftwagen, das zwischen einer Schließstellung und einer Offenstellung bewegbar ist und eine im Fahrgastraum wirkende Innenleuchte, einen Verdeckbezug (12) und eine Innenverkleidung (13) aufweist, die beide aus flexiblem Werkstoff bestehen, wobei wenigstens ein quer zur Fahrzeuglängsrichtung verlaufender Spriegel (14, 15) eines Verdeckgestänges des Faltverdecks zumindest bereichsweise unterhalb des Verdeckbezugs (12) verläuft, **dadurch gekennzeichnet, dass** die Innenleuchte (16) in die Innenverkleidung (13) integriert ist und in der Schließstellung (Schst) des Faltverdecks (6) mittels einer Zurreinrichtung (17) gegen einen benachbarten eine Oberseite (18) und eine Unterseite (19) aufweisenden ersten Spriegel (14) des Verdeckgestänges gespannt wird.

2. Faltverdeck nach Anspruch 1, **dadurch gekennzeichnet, dass** ein Rand (21) eines Streuscheibenkörpers (20) der Innenleuchte von einem Streuscheibenkörperrrahmen (22) umgeben wird, der auf einer dem ersten Spriegel (14) zugekehrten Seite mit einem etwa horizontal ausgerichteten Stützarm (23) mit dem ersten Spriegel (14) zusammenwirkt.

3. Faltverdeck nach den Ansprüchen 1 und 2, **dadurch gekennzeichnet, dass** zwischen einander zugekehrten Randabschnitten (25 und 28) des Streuscheibenkörpers (20) und des Streuscheibenkörperrahmens (22) die Innenverkleidung (13) festgelegt ist.

4. Faltverdeck nach den Ansprüchen 1 und 2, **dadurch gekennzeichnet, dass** der Stützarm (23) etwa zwischen Oberseite (18) und Unterseite (19) des ersten Spriegels (14) an diesen herangeführt ist.

5. Faltverdeck nach Anspruch 2, **dadurch gekennzeichnet, dass** der Stützarm (23) mit einem ersten aufrechten Stützabschnitt (28) und einem zweiten horizontalen Stützabschnitt (29) an einen aufrechten Gegenabschnitt (30) bzw. einen horizontalen Gegenabschnitt (31) direkt anschließt.

6. Faltverdeck nach einem oder mehreren der vorangehenden Ansprüche, **dadurch gekennzeichnet, dass** der Stützarm (23) mit dem relativ flachen Stützabschnitt (32) an der flächigen Unterseite (19) des ersten Spriegels (14) anliegt.

7. Faltverdeck nach Anspruch 6, **dadurch gekennzeichnet, dass** der Stützabschnitt (23) auf einer dem Fahrgastraum (Fg) zugekehrten Seite mit einer Haltelasche (33) verbunden ist.

8. Faltverdeck nach Anspruch 7, **dadurch gekennzeichnet, dass** benachbart des Stützabschnitts (23) die Haltelasche (33) und die Innenverkleidung (13) an einer Verbindungsstelle (34) zusammengesetzt sind.

9. Faltverdeck nach Anspruch 7, **dadurch gekennzeichnet, dass** die Haltelasche (33) an einem von der Verbindungsstelle (34) abgekehrten freien Ende mittels einer Verdickung (35) in einer korrespondierenden Aufnahme (36) des ersten Spriegels (14) ruht.

10. Faltverdeck nach den Ansprüche 1 und 5, **dadurch gekennzeichnet, dass** der horizontale Gegenabschnitt (29) Teil der Unterseite (19) des ersten Spriegels (14) ist.

11. Faltverdeck nach den Ansprüchen 1 und 2, **dadurch gekennzeichnet, dass** die Zurreinrichtung (17) am Stützarm (23) des Streuscheibenkörperrahmens (22) angreift und über die Oberseite (18) des ersten Spriegels (14) hinweggeführt und an einem Element des Verdeckgestänges befestigt ist.

12. Faltverdeck nach Anspruch 11, **dadurch gekennzeichnet, dass** die Zurreinrichtung (17) durch eine Öffnung (40) des Stützarms (23) hindurchgeführt ist und sich mit einer Verdickung (43) an einer Wand (41) des Stützarms (23) abstützt.

13. Faltverdeck nach Anspruch 11, **dadurch gekennzeichnet, dass** das Element durch einen zweiten Spriegel (15) gebildet wird, der mit Abstand zum ersten Spriegel (14) quer zur Fahrzeuglängsrichtung (A-A) verläuft.

14. Faltverdeck nach einem oder mehreren der vorangehenden Ansprüche, **dadurch gekennzeichnet, dass** die Zurreineinrichtung (17) durch ein elastisches Band gebildet wird.

15. Faltverdeck nach einem oder mehreren der vorangehenden Ansprüche, **dadurch gekennzeichnet, dass** zumindest der erste Spriegel (14) durch einen Hohlkörper gebildet wird, an dem in Fahrzeuglängsrichtung (A-A) gesehen an aufrechten Wänden (44 und 45) beabstandete Aufnahmen für Haltelaschen (33 und 46) des Verdeckbezugs (12) und der Innenverkleidung (13) vorgesehen sind.

## Claims

1. Collapsible roof (6) for a cabriolet vehicle, which is movable between a closed position and an open position and has an interior light active in the passenger compartment, and a top cover (12) and an interior lining (13) which are both composed of flexible material, wherein at least regions of at least one bow (14, 15) of a top linkage of the folding top, which bow runs transversely with respect to the longitudinal direction of the vehicle, run below the top cover (12), **characterized in that** the interior light (16) is integrated in the interior lining (13) and, in the closed position (Schst) of the folding top (6), is tensioned by means of a lashing device (17) against an adjacent first bow (14) of the top linkage, said bow having an upper side (18) and a lower side (19).

2. Collapsible roof according to Claim 1, **characterized in that** an edge (21) of a headlight lens body (20) of the interior light is surrounded by a headlight lens body frame (22) which, on a side facing the first bow (14), interacts with the first bow (14) by means of an approximately horizontally oriented supporting arm (23).

3. Collapsible roof according to Claims 1 and 2, **characterized in that** the interior lining (13) is fixed between mutually facing edge sections (25 and 28) of the headlight lens body (20) and of the headlight lens body frame (22).

4. Collapsible roof according to Claims 1 and 2, **characterized in that** the supporting arm (23) is guided up to the first bow (14) approximately between the upper side (18) and lower side (19) thereof.

5. Collapsible roof according to Claim 2, **characterized in that** the supporting arm (23) directly adjoins an upright mating section (30) and a horizontal mating section (31) by means of a first, upright supporting section (28) and a second, horizontal supporting section (29), respectively.

6. Collapsible roof according to one or more of the preceding claims, **characterized in that** the supporting arm (23) bears with the relatively flat supporting section (32) against the planar lower side (19) of the first bow (14).

7. Collapsible roof according to Claim 6, **characterized in that** the supporting section (23) is connected to a retaining clip (33) on a side facing the passenger compartment (Fg).

8. Collapsible roof according to Claim 7, **characterized in that**, adjacent to the supporting section (23), the retaining clip (33) and the interior lining (13) are assembled at a connecting point (34).

9. Collapsible roof according to Claim 7, **characterized in that** the retaining clip (33) rests at a free end facing away from the connecting point (34) in a corresponding receptacle (36) of the first bow (14) by means of a thickened portion (35).

10. Collapsible roof according to Claims 1 and 5, **characterized in that** the horizontal mating section (29) is part of the lower side (19) of the first bow (14).

11. Collapsible roof according to Claims 1 and 2, **characterized in that** the lashing device (17) acts on the supporting arm (23) of the headlight lens body frame (22) and is guided beyond the upper side (18) of the first bow (14) and is fastened to an element of the top linkage.

12. Collapsible roof according to Claim 11, **characterized in that** the lashing device (17) is guided through an opening (40) in the supporting arm (23) and is supported with a thickened portion (43) on a wall (41) of the supporting arm (23).

13. Collapsible roof according to Claim 11, **characterized in that** the element is formed by a second bow (15) which runs transversely with respect to the longitudinal direction (A-A) of the vehicle at a distance from the first bow (14).

14. Collapsible roof according to one or more of the preceding claims, **characterized in that** the lashing device (17) is formed by an elastic band.

15. Collapsible roof according to one or more of the preceding claims, **characterized in that** at least the first bow (14) is formed by a hollow body on which, as seen in the longitudinal direction (A-A) of the vehicle, receptacles which are spaced apart on upright walls (44 and 45) are provided for retaining clips (33 and 46) of the top cover (12) and the interior lining (13).

## Revendications

1. Toit escamotable (6) pour un véhicule cabriolet, pouvant être déplacée entre une position fermée et une position ouverte et comportant un éclairage intérieur éclairant l'habitacle, une enveloppe de capote (12) et un habillage intérieur (13) tous deux en matière flexible, au moins un arceau (14, 15) de barre de capote de la capote escamotable, s'étendant transversalement à la direction longitudinale du véhicule, s'étendant au moins par endroits en dessous de l'enveloppe de capote (12), **caractérisée en ce que** l'éclairage intérieur (16) est intégré dans l'habillage intérieur (13) et est coincé, dans la position fermée (Schst) de la capote escamotable (6), à l'aide d'un dispositif d'amarrage (17), contre un premier arceau (14) connexe de la barre de capote comportant un côté supérieur (18) et un côté inférieur (19).

2. Toit escamotable selon la revendication 1, **caractérisée en ce qu'**un bord (21) d'un corps de disque de dispersion (20) de l'éclairage intérieur est entouré par un cadre de corps de disque de dispersion (22) interagissant avec le premier arceau (14) sur un côté opposé au premier arceau (14), avec un bras d'appui (23) orienté approximativement horizontalement.

3. Capote escamotable selon les revendications 1 et 2, **caractérisée en ce que** l'habillage intérieur (13) est fixé entre les sections de bordure (25 et 26) opposées l'une par rapport à l'autre du corps de disque de dispersion (20) et du cadre de corps de disque de dispersion (22).

4. Toit escamotable selon les revendications 1 et 2, **caractérisée en ce que** le bras d'appui (23) est guidé contre le premier arceau (14) approximativement entre le côté supérieur (18) et le côté inférieur (19) de celui-ci.

5. Toit escamotable selon la revendication 2, **caractérisée en ce que** le bras d'appui (23) est directement raccordé à une première section d'appui (28) verticale et à une deuxième section d'appui (29) horizontale au niveau d'une contre-section (30) verticale et/ou d'une contre-section (31) horizontale.

6. Toit escamotable selon l'une quelconque des revendications précédentes ou plusieurs d'entre elles, **caractérisée en ce que** le bras d'appui (23) repose avec la section d'appui (32) relativement plate contre le côté inférieur (19) plat du premier arceau (14).

7. Toit escamotable selon la revendication 6, **caractérisée en ce que** la section d'appui (23) et reliée à une bride de blocage (33) sur un côté opposé à l'habitacle (Fg).

8. Toit escamotable selon la revendication 7, **caractérisée en ce que** la bride de blocage (33) et l'habillage intérieur (13) sont assemblés au niveau d'un point de jonction (34) à proximité de la section d'appui (23).

9. Toit escamotable selon la revendication 7, **caractérisée en ce que** la bride de blocage (33) repose dans un logement (36) correspondant du premier arceau (14) à l'aide d'un épaississement (35), au niveau d'une extrémité libre opposée au point de jonction (34).

10. Toit escamotable selon les revendications 1 et 5, **caractérisée en ce que** la contre-section (29) horizontale fait partie du côté inférieur (19) du premier arceau (14).

11. Toit escamotable selon les revendications 1 et 2, **caractérisée en ce que** le dispositif d'amarrage (17) s'engrène au niveau du bras d'appui (23) du cadre de corps de disque de dispersion (22) et est introduit par le biais du côté supérieur (18) du premier arceau (14) et fixé à un élément de la barre de capote.

12. Toit escamotable selon la revendication 11, **caractérisée en ce que** le dispositif d'amarrage (17) est introduit à travers une ouverture (40) du bras d'appui (23) et s'appuie avec un épaississement (43) contre une paroi (41) du bras d'appui (23).

13. Toit escamotable selon la revendication 11, **caractérisée en ce que** l'élément prend la forme d'un deuxième arceau (15) s'étendant à une certaine distance du premier arceau (14), transversalement à la direction longitudinale du véhicule (A-A).

14. Toit escamotable selon l'une quelconque des revendications précédentes ou plusieurs d'entre elles, **caractérisée en ce que** le dispositif d'amarrage (17) est constitué par une bande élastique.

15. Toit escamotable selon l'une quelconque des revendications précédentes ou plusieurs d'entre elles, **caractérisée en ce qu'**au moins le premier arceau (14) est formé par un corps creux au niveau duquel des logements sont prévus pour les brides de blocage (33 et 46) de l'enveloppe de capote (12) et de l'habillage intérieur (13), espacées au niveau des parois verticales (44 et 45) vues dans la direction longitudinale du véhicule (A-A).
